# EUROPÄISCHE PATENTANMELDUNG

(11) **EP 0 527 356 A1**
(43) Veröffentlichungstag der Anmeldung: **17.02.1993**
(21) Anmeldenummer: 92112350.1
(22) Anmeldetag: 20.07.1992
(51) Int. Cl.: G21C 19/307

(54) **Verfahren zur Behandlung des Primärkühlmittels eines Druckwasserkernreaktors**

(30) Priorität: 09.08.1991 DE 4126467
(71) Anmelder: PROMOTECH CORPORATION, FL-9490 Vaduz (LI)
(72) Erfinder: Pasevic,Vladimir Ivanovic, Mytisci, Moskovskoi oblasti (SU); Pasevic,Dmitrii Vladimirovic, Mytisci, Moskovskoi oblasti (SU)
(74) Vertreter: von Füner, Alexander, Dr.

(57) **Zusammenfassung**

Gegenstand der Erfindung ist ein Verfahren zur Behandlung eines Primärkühlmittels eines Druckwasserreaktors unter Steuerung seiner Leistung durch den H₃BO₃-Gehalt im Kühlmittel, wobei man dem Kreislauf eines bis zur kommerziellen Energieerzeugung hochgefahrenen Reaktors kontinuierlich Hydrazinhydrat (NH₄.H₂O) in einer Menge zuführt, daß sein Gehalt in der dem Reaktor entnommenen Kühlmittelprobe 5.10⁻⁶ bis 5.10⁻² g/kg Kühlmittel beträgt, sowie KOH und/oder LiOH, das den alkalischen Eigenschaften von KOH entspricht, und zwar in einer Menge von 80 bis 5,6 mg/kg Kühlmittel, bezogen auf die Menge an H₃BO₃, die sich in einem Bereich von 20 bis 0 g/kg Kühlmittel bewegt und auf an sich bekannte Weise den überschüssigen Wasserstoff aus dem System bis zu einer Menge entfernt, die einer maximalen Wasserstoffmenge im Kühlmittel von 100 n.ml/kg entspricht.

## Beschreibung

Die Erfindung betrifft Druckwasserreaktoren unter Regelung ihrer Leistung durch den Gehalt an Borsäure (H₃BO₃) im Kühlmittel und insbesondere ein Verfahren zur Verbesserung der wasserchemischen Bedingungen in Reaktoren.

Die stärkste Aktivierung beim Betrieb von Kernreaktoren erfahren bekanntlich die im Kühlmittel enthaltenen unlöslichen Verbindungen und Metalloxide (O.I. Martynov, A.S. Kopylov, "Vodno-chimiceskie re 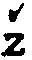 imy AES, sistemy ich podder 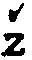 anija i kontrolja", Moskau, Energoisdat, 1983, S. 49-50).

Die Analyse der Löslichkeitskonstanten der Metalloxide im Reaktorwasser hat je nach der Temperatur und der LiOH- und KOH-Konzentration ergeben, daß unter praktisch gleichen Bedingungen die Löslichkeit für Nickeloxid erheblich geringer ist als die für Eisen-, Chrom-, Mangan-, Kobaltoxid und andere Oxide.

Während des Reaktorbetriebs wird das Nickeloxid zur Quelle der Bildung von ⁵⁸Co, eines der wichtigsten kontaminierenden radioaktiven Isotope bei den meisten aus Stahl mit hohem Ni-Gehalt hergestellten Reaktoren.

Eine Steigerung der Löslichkeit des Nickeloxids kann entweder durch Steigerung der Temperatur des Mediums oder durch Erhöhung der Alkalinität des Kühlmittels durch Anhebung des Gehalts an LiOH oder KOH erfolgen. Eine Erhöhung der Temperatur des Mediums durch gesteigerte Wärmefreisetzung in der Spaltzone führt jedoch zu einer Verminderung der Sicherheit beim Betrieb der Brennelemente (A.S. Kopylov, E.I. Verchovskij "Specvodoocistka na atomnych elektrostancijach", Moskau, "Vys 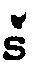 aja 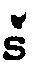 kola", 1988, S. 109).

Untersucht wurde die Steigerung der Alkalinität des Kühlmittels bei Druckwasserreaktoren (s. Report of IAEA, Coolant technology of water reactors, Doc. 0846j, 11.03.91, S. 27-29). Dabei wurde ein maximal zulässiger pH-Wert von 8 (anhand einer heißen Probe) ermittelt und festgestellt, daß infolge der Bildung bestimmter Mengen an Oxidradikalen, d.h. von Radiolyseprodukten des Wassers, die Steigerung der Alkalinität zu einer Versprödung der nichtrostenden Stähle führen kann, aus denen die einzelnen Bauteile des Kernreaktors hergestellt sind.

Die zulässigen Alkalinitätsbereiche in Abhängigkeit von der H₃BO₃-Menge sind in "Report of IAEA "Collant technology of water reactors" (Doc. 0846j), 11.03.91, S. 27, angegeben.

Der Erfindung liegt die Aufgabe einer starken Erhöhung der Löslichkeit von Ni-Oxiden und damit eine Senkung der Kontamination von Reaktoren mit ⁵⁸Co zugrunde.

Diese Aufgabe wird wie aus den nachstehenden Ansprüchen ersichtlich dadurch gelöst, daß man dem Kühlkreislauf eines bis zur Energieerzeugung hochgefahrenen Reaktors kontinuierlich Hydrazinhydrat (NH₄.H₂O) in einer Menge zuführt, daß sein Gehalt in der dem Reaktor entnommenen Kühlmittelprobe 5.10⁻⁶ bis 5.10⁻² g/kg Kühlmittel beträgt, sowie KOH und/oder LiOH, das den alkalischen Eigenschaften von KOH entspricht, und zwar in einer Menge von 80 bis 5,6 mg/kg Kühlmittel, bezogen auf die Menge an H₃BO₃, die sich in einem Bereich von 20 bis 0 g/kg Kühlmittel bewegt und auf an sich bekannte Weise den überschüssigen Wasserstoff aus dem System bis zu einer Menge entfernt, die einer maximalen Wasserstoffmenge im Kühlmittel von 100 n.ml/kg entspricht.

Die kontinuierliche Zufuhr von Hydrazinhydrat zum Kühlmedium ermöglicht eine praktisch vollständige Vermeidung der Bildung von Oxidradikalen und damit eine Steigerung der Alkalikonzentration, ohne daß dabei die Gefahr einer Alkaliversprödung des nichtrostenden Stahls besteht.

Die bevorzugten Mengen an dem Kühlmittel zugeführten KOH und/oder LiOH beträgt 35 bis 5,6 mg/kg bei einer Konzentration an H₃BO₃ von 10 bis 0 g/kg.

Diese Mengen entsprechen einer Reaktorbetriebsperiode, da die H₃BO₃-Konzentration unter entsprechendem Absinken der Konzentration der Alkalizusätze von anfangs 20 g/kg auf 0 g/kg absinkt.

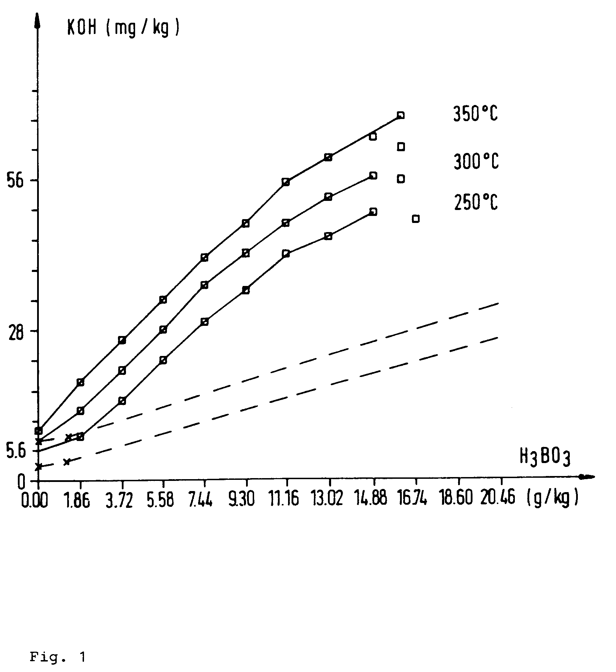

Fig. 1 zeigt die Abhängigkeit der Mengen an KOH und/oder LiOH von der Menge an H₃BO₃. Dabei entsprechen die unterbrochenen Linien den bekannten Verfahren und die durchgehenden dem erfindungsgemäßen Verfahren bei unterschiedlichen Temperaturen des Kühlmediums bei Leistungsbetrieb eines Kernreaktors.

Ein Vergleich der Kurven ergibt, daß bei ein und derselben H₃BO₃-Menge (z.B. 17 g/kg Kühlmittel) bei dem bekannten Verfahren 22 mg Alkali pro kg Kühlmittel zugeführt werden, während beim erfindungsgemäßen Verfahren die entsprechende Menge auf ca. 50 bis 70 mg/kg Kühlmittel erhöht wird.

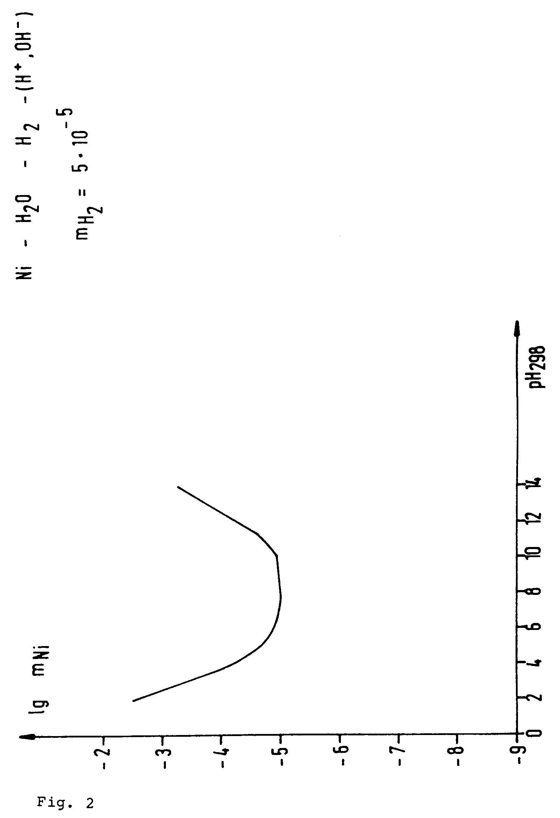

Fig. 2 zeigt die Abhängigkeit der Löslichkeit des Oxids vom pH-Wert des auf die Temperatur des Reaktors bei voller Leistung gebrachten Kühlmittels. Die bekannten Kernreaktoren arbeiten bei einem pH von 7 bis 8. Die dem Kühlmittel zugeführten Mengen an KOH und/oder LiOH ermöglichen eine Steigerung des pH's des Kühlmittels auf 10 bis 13, was eine Lösung der Ni-Oxide ohne Versprödung des nichtrostenden Stahls begünstigt.

Das Verfahren kann sowohl bei bereits in Betrieb befindlichen Reaktoren durch Ersatz von NH₃ durch Hydrazinhydrat als auch bei neu in Betrieb genommenen Reaktoren durchgeführt werden.

Das Verfahren wird wie folgt durchgeführt:
- Vor Inbetriebnahme des Reaktors werden die Ionenaustauschfilter zur Reinigung des Wassers mit Gleichgewichtskonzentrationen an NH₃ und KOH und/oder LiOH gesättigt;
- nach dem Übergang zur kommerziellen Energieerzeugung und Stabilisierung der H₃BO₃-Konzentration im Reaktor wird kontinuierlich in den angeführten Mengen Hydrazinhydrat zugeführt und der überschüssige Wasserstoff aus dem Kühlmittel bis zu Werten entfernt, die einer maximalen Wasserstoffmenge im Kühlmittel von 100 n.ml/kg entspricht, wobei außerdem dem Kühlmittel KOH und/oder LiOH in Mengen zugeführt wird, die gemäß Fig. 1 von der H₃BO₃-Konzentration und von den Temperaturbedingungen des Kühlmittels abhängen.

## Patentansprüche

1. Verfahren zur Behandlung eines Primärkühlmittels eines Druckwasserreaktors unter Steuerung seiner Leistung durch den H₃BO₃-Gehalt im Kühlmittel, dadurch **gekennzeichnet,** daß man dem Kreislauf eines bis zur kommerziellen Energieerzeugung hochgefahrenen Reaktors kontinuierlich Hydrazinhydrat (NH₄.H₂O) in einer Menge zuführt, daß sein Gehalt in der dem Reaktor entnommenen Kühlmittelprobe 5.10⁻⁶ bis 5.10⁻² g/kg Kühlmittel beträgt, sowie KOH und/oder LiOH, das den alkalischen Eigenschaften von KOH entspricht, und zwar in einer Menge von 80 bis 5,6 mg/kg Kühlmittel, bezogen auf die Menge an H₃BO₃, die sich in einem Bereich von 20 bis 0 g/kg Kühlmittel bewegt und auf an sich bekannte Weise den überschüssigen Wasserstoff aus dem System bis zu einer Menge entfernt, die einer maximalen Wasserstoffmenge im Kühlmittel von 100 n.ml/kg entspricht.

2. Verfahren nach Anspruch 1, dadurch **gekennzeichnet,** daß man dem Kühlmittel KOH und/oder eine äquivalente Menge LiOH in einer Konzentration von 35 bis 5,6 mg, bezogen auf 1 kg Kühlmittel, bei einer Konzentration der Borsäure von 10 bis 0 g pro kg Kühlmittel zuführt.
